# EUROPÄISCHE PATENTSCHRIFT

(11) **EP 0 681 936 B1**
(45) Veröffentlichungstag und Bekanntmachung des Hinweises auf die Patenterteilung: **28.05.1997**
(21) Anmeldenummer: 95107052.3
(22) Anmeldetag: 10.05.1995
(51) Int. Cl.: B60J 7/22

(54) **Windabweiser für Fahrzeugdächer mit beweglichem Dachteil**
Wind deflector for vehicle mobile roof
Déflecteur pour toit amovible de véhicule

(30) Priorität: 14.05.1994 DE 4417049
(43) Veröffentlichungstag der Anmeldung: 15.11.1995
(73) Patentinhaber: WEBASTO KAROSSERIESYSTEME GmbH, D-82131 Stockdorf (DE)
(72) Erfinder: Birndorfer, Robert, D-81539 München (DE)
(74) Vertreter: Wiese, Gerhard

(56) Entgegenhaltungen:
- DE-C- 4 102 660
- GB-A- 2 251 223

## Beschreibung

Die Erfindung betrifft einen Windabweiser für eine mittels eines beweglichen Dachteils verschließbare und wenigstens teilweise freigebbare Dachöffnung in einem Fahrzeug, wobei der Windabweiser ein an der Vorderkante der Dachöffnung angeordnetes Luftleitprofil und eine Führungseinrichtung aufweist, die das Luftleitprofil mittels einer Ausstellbewegung in eine Betriebsstellung und mittels einer Rückstellbewegung in eine Außerbetriebsstellung führt, und wobei das Dachteil am Luftleitprofil in dessen Außerbetriebsstellung abdichtend anliegt.

Ein derartiger Windabweiser für ein Faltdach ist aus der DE 41 02 660 C1 bekannt. Er weist ein flaches, plattenförmiges Luftleitprofil auf, das mittels einer Schwenklagerung mit einer luftleitprofilnahen Schwenkachse an der Vorderkante des Dachausschnitts befestigt ist und durch zwei Schenkelfedern, die in einem vertieften Raum (beispielsweise einem Wasserablauf) an der Vorderkante des Dachausschnitts untergebracht sind, in eine Betriebsstellung schwenkbar ist. In Außerbetriebsstellung (d. h. in geschlossener Stellung des Faltdachs und des Windabweisers) liegt das Luftleitprofil mit seinem Vorderbereich an einer rahmenfesten Abdeckleiste an. Eine flexible Dichtung ist an der Abdeckleiste befestigt und liegt auf dem Luftleitprofil auf, um den vorderen Spalt zwischen Luftleitprofil und Abdeckleiste zu schließen. In seinem hinteren Bereich liegt das Luftleitprofil auf einem vorderen Festteil des Faltdachs auf. Wenn das Faltdach geöffnet wird, führt dieses vordere Festteil anfangs eine für diese Dächer typische Hubbewegung aus, wobei sich gleichzeitig das Luftleitprofil von dem vorderen Festteil abhebt und durch die Kraft der Schenkelfedern in seine ausgestellte Betriebsstellung schwenkt, bevor das Faltdach durch eine im wesentlichen horizontale Öffnungsbewegung verschoben wird und die eigentliche Öffnung des Daches beginnt. Somit setzt eine windabweisende Wirkung des Luftleitprofils schon vor dem tatsächlichen Öffnen des Faltdaches (d. h. dem Öffnen des Dachausschnitts) ein. Folglich wird ein unerwünschter Luftzug vermieden, wie er bei einem Windabweiser auftritt, der in Außerbetriebsstellung unter dem Vorderteil des Schiebedachs angeordnet ist und erst ausgefahren werden kann, nachdem das Schiebedach schon einen zum Ausfahren des Windabweisers erforderlichen Spalt geöffnet worden ist.

Da beim Hochschwenken des Windabweisers bzw. des Luftleitprofils gemäß der DE 41 02 660 C1 eine Öffnung zwischen Luftleitprofil und Festteil des Faltdaches verbleibt, kann jedoch auch an diesem Spalt Zugluft mit Geräuschbelästigung auftreten.

Des weiteren erfordert das großflächige Luftleitprofil des Windabweisers einen erheblichen Platzbedarf am Rahmen der Dachöffnung sowie entsprechende Anpassungen in seinem Auflagebereich auf dem Festteil des Faltdaches. Auch wird die Größe des Windabweisers aus optischen Gründen nicht immer akzeptiert.

Weiterhin sind feste, im Rahmen integrierte Windabweiser und separate, auf der Dachhaut montierte Windabweiser für Falt- oder Spoilerdächer bekannt. Da derartige Windabweiser bei geschlossenem Falt- oder Spoilerdach weder versenkt noch zumindest teilweise abgesenkt werden, werden sie jedoch aus optischen Gründen vom Kunden häufig nicht akzeptiert.

Der Erfindung liegt daher die Aufgabe zugrunde, einen Windabweiser der oben angegebenen Art zu schaffen, der eine verbesserte Luftleitung ohne Zuglufterscheinung beim Öffnen des Daches insbesondere bei Spoiler- oder Faltdächern gestattet.

Diese Aufgabe wird erfindungsgemäß durch einen Windabweiser mit den Merkmalen des Anspruchs 1 gelöst. Vorteilhafte Ausgestaltungen sind in den Unteransprüchen angegeben.

Dadurch, daß das Luftleitprofil und das Dachteil während der Ausstellbewegung und während der Rückstellbewegung des Luftleitprofils in abdichtendem Kontakt gehalten werden, kann mangels eines sich öffnenden Spaltes keine Zugluft mit einhergehender Geräuschbelästigung auftreten. Vielmehr wird beim Ausfahren des Luftleitprofils die Luftleitung kontinuierlich verstärkt, bis in der Betriebsstellung des Luftleitprofils die endgültige strömungsgünstige Luftleitung aufgebaut ist, wobei dann bei diesen optimierten Strömungsbedingungen das bewegliche Dachteil verschoben wird und zugluftfrei die Dachöffnung freigibt. Der abdichtende Kontakt kann durch Linien- oder Flächenberührung zwischen Luftleitprofil und Dachteil erreicht werden, wobei beide bei der Ausstell- und Rückstellbewegung relativ zuaneinander eine Abwälz- oder eine Gleitbewegung ausführen.

Das Luftleitprofil ist vorteilhaft in seiner geneigten Ruheposition in einer zur Luftleitung geeigneten Stellung am vorderen Wasserlauf abgesenkt angeordnet. Dadurch kann die Führungseinrichtung das Luftleitprofil bei der Ausstellbewegung und der Rückstellbewegung in vorteilhafter Weise auf einer geraden oder leicht gekrümmten Bahnkurve in seine Betriebsstellung oder Außerbetriebsstellung anheben bzw. absenken. Gegenüber einem großflächigen Luftleitprofil, das durch Schwenken um eine luftleitprofilnahe Schwenkachse hochgeklappt wird, wird somit das in Fahrzeuglängsrichtung schmale Luftleitprofil bei lediglich geringem Platzbedarf in der Dachebene durch diese hindurch angehoben und abgesenkt, wobei es dennoch bei vergleichsweise geringer Baugröße die benötigte Luftleitung erzielt.

Das Luftleitprofil kann auf vielfältige Weise gelagert und geführt sein. Beispielsweise ist es auf Führungsstiften angebracht, an denen es längs verschoben wird. In vorteilhafter Ausbildung schwenkt die Führungseinrichtung das Luftleitprofil um eine luftleitprofilferne Querachse. Damit ergibt sich eine annähernd lineare Hebe- und Senkbewegung. Die Querachse kann sich vor oder hinter dem Luftleitprofil befinden, wobei die Anordnung hinter dem Luftleitprofil in Verbindung mit einer Führungseinrichtung, die Ausstellarme am seitlichen Dachrahmen der Dachöffnung aufweist, besonders zweckmäßig ist, da sie den baulichen Gegebenheiten am Dachrahmen der Dachöffnung entgegenkommt.

Das Luftleitprofil ist vorteilhaft so angeordnet und geführt, daß es auch in seiner Außerbetriebsstellung, d. h. bei geschlossenem Dachteil, zwischen dem Dachteil und der Vorderkante der Dachöffnung angeordnet ist und somit das Dachteil von der Vorderkante trennt. Wenn es dabei über die Dachhaut hinausragt, kann es eine strömungsgünstige Luftleitung am Vorderteil des beweglichen Dachteils erzeugen, auch wenn dieses geschlossen ist. Die Ausstellarme können dann der Form des seitlichen Vorderteils des beweglichen Dachteils dadurch angepaßt sein, daß jeder Ausstellarm einen Längsabschnitt zum Befestigen an einem Dachrahmen der Dachöffnung und einen daran anschließenden, mit dem Luftleitprofil verbundenen Übergangsabschnitt enthält. Der Übergangsabschnitt wird bei geschlossenem Dachteil zumindest teilweise vom Dachteil überdeckt und er ist an der Stelle, an der die Vorderkante des Dachteils ihn bedeckt, an das Dachteil in seiner Form angepaßt.

Um das Luftleitprofil in seiner Betriebsstellung definiert festzulegen, kann am Dachrahmen im Bereich von jedem Ausstellarm ein Anschlag zum Begrenzen des Ausstellweges des Ausstellarmes angebracht sein. Dadurch entfällt ein entsprechender Anschlag am Luftleitprofil. Wird der Anschlag einstellbar ausgebildet, so kann die Betriebsstellung des Luftleitprofils einjustiert werden.

Vorzugsweise ist der Ausstellarm zumindest in seinem Längsabschnitt als vorgespanntes Federblech ausgebildet, durch das die Kraft zum Ausstellen des Luftleitprofils aufgebracht wird. Jedoch kann der Ausstellarm auch - gegebenenfalls zusätzlich - durch ein Federelement, z. B. eine Blatt- oder Schraubenfeder, in Ausstellrichtung vorgespannt sein.

Wenn der Ausstellarm aus Kunststoff besteht, wird ein derartiges Federelement unter dem Ausstellarm angeordnet, so daß es den Ausstellarm unter elastischer Verformung aufwärts drückt oder biegt.

Vorzugsweise enthält das Luftleitprofil eine Paßfläche zum Eingriff mit einem Vorderbereich des Dachteils, die insbesondere konkav ausgebildet ist. Dadurch ergibt sich einerseits eine besonders gute Abdichtung, und andererseits kann der Vorderbereich des Dachteils bei seiner Senkbewegung das Luftleitprofil sicher in seine Außerbetriebsstellung herabdrücken. An der Paßfläche kann eine Dichtung angebracht sein, so daß Passungsungenauigkeiten ausgeglichen werden können.

Wenn zusätzlich eine Dichtung zwischen der Vorderkante der Dachöffnung und dem Luftleitprofil angeordnet ist, können auch hier Lageungenauigkeiten ausgeglichen werden. Außerdem kann durch ein geeignetes, beispielsweise teflonbeschichtetes Dichtungsmaterial die Reibung bei der Verschiebe- bzw. Schwenkbewegung des Luftleitprofils an der Vorderkante der Dachfläche reduziert und einer eventuellen Beschädigung durch Verkratzen kann vorgebeugt werden.

Der erfindungsgemäße Windabweiser ist besonders vorteilhaft bei einem Faltdach einsetzbar, dessen Vorderkante in geschlossenem Zustand oberhalb der Dachkontur liegt. Er ist darüberhinaus jedoch ist er auch für solche Spoilerdächer, Hebedächer oder Schiebehebedächer geeignet, bei denen die Deckelvorderkante zu Beginn einer Öffnungsbewegung um einen bestimmten Betrag angehoben wird. In diesem Falle wird er vorteilhafterweise in Außerbetriebsstellung bündig mit der Dachkontur angeordnet.

Das Luftleitprofil ist vorzugsweise als Hohlprofil mit einem geschlossenen Querschnitt ausgebildet. Damit wird eine hohe Steifigkeit bei geringem Gewicht erzielt, letzteres insbesondere, wenn das Luftleitprofil aus Kunststoff oder aus Leichtmetall besteht. Ein geschlossenes Hohlprofil eignet sich auch besonders gut für eine ineinandergreifende Steckverbindung des Luftleitprofils mit den beidseits angeordneten Führungseinrichtungen. Jedoch sind auch andere Gestaltungen des Querschnitts möglich, z. B. ein unten offener Querschnitt oder ein plattenförmiges Profil. Insbesondere bei einem Luftleitprofil aus Kunststoff ist darüberhinaus eine einstückige Ausgestaltung des Luftleitprofils mit der Führungseinrichtung in einem einzigen Formwerkzeug vorteilhaft realisierbar.

Nachfolgend wird die Erfindung anhand eines Ausführungsbeispiels unter Bezugnahme auf beiliegende Zeichnungen näher erläutert. Es zeigt:
- Fig. 1: in perspektivischer Ansicht ein Fahrzeugdach mit einem geschlossenen Faltdach und mit einem erfindungsgemäßen Windabweiser in Außerbetriebsstellung;
- Fig. 2: in einer Schnittansicht entlang der Linie I-I der Fig. 1 den Windabweiser in Außerbetriebsstellung (bei geschlossenem Faltdach);
- Fig. 3: entsprechend Fig. 2 den Windabweiser in Betriebsstellung in der Öffnungsphase des Faltdaches; und
- Fig. 4: in perspektivischer Darstellung den vorderen Teil des Faltdaches mit einem Ausstellarm des Windabweisers.

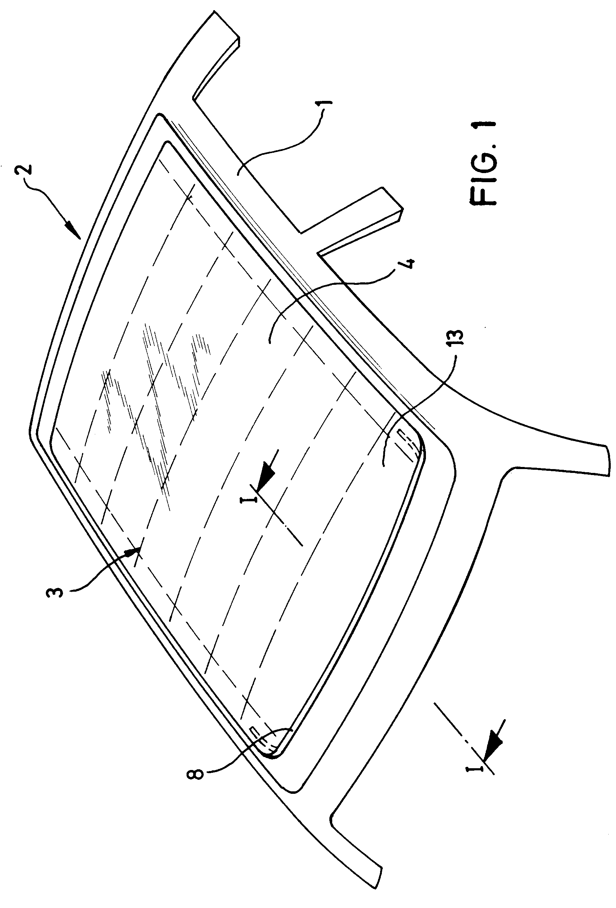

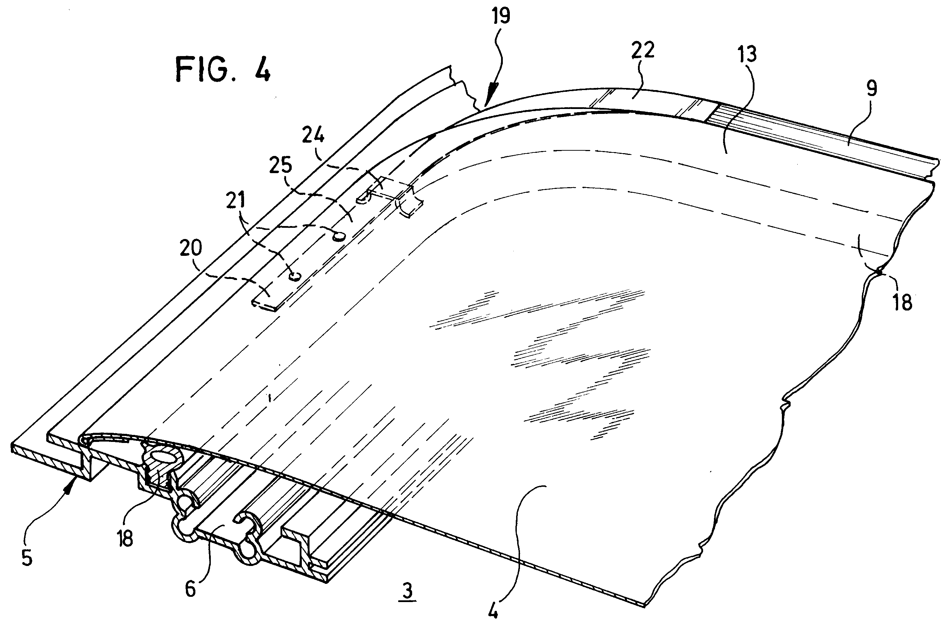

In der festen Dachfläche 1 eines Fahrzeugdachs 2 ist eine Dachöffnung 3 vorgesehen (siehe Fig. 1), die mittels eines beweglichen, flexiblen Faltdaches 4 wahlweise verschlossen oder mindestens teilweise freigelegt werden kann. Die Dachöffnung 3 ist vorne und seitlich von einem Dachrahmen 5 umgeben, der in bekannter Weise in Fahrzeuglängsrichtung verlaufende Führungsschienen 6 (siehe Fig. 4) aufweist, an denen das Faltdach 4 über Gleitschuhe oder dergleichen geführt ist. Das Dach 2 kann statt des Faltdaches auch einen verschiebbaren starren Deckel eines Spoilerdaches (nicht dargestellt) aufweisen, der beim Öffnen hinten angehoben wird und beim Zurückschieben über dem hinter der Hinterkante der Dachöffnung 3 befindlichen Teil der festen Dachfläche 1 zu liegen kommt.

Das Fahrzeugdach 2 ist im wesentlichen spiegelsymmetrisch zu einer Längsmittelachse ausgebildet. Die nachstehende Erläuterung der einen Seite des Daches samt Windabweiser gilt daher sinngemäß auch für die andere Seite. Die verwendeten Begriffe "vorne", "hinten", "längs" und "quer" beziehen sich auf das zugehörige Fahrzeug bzw. dessen Vorwärtsfahrtrichtung.

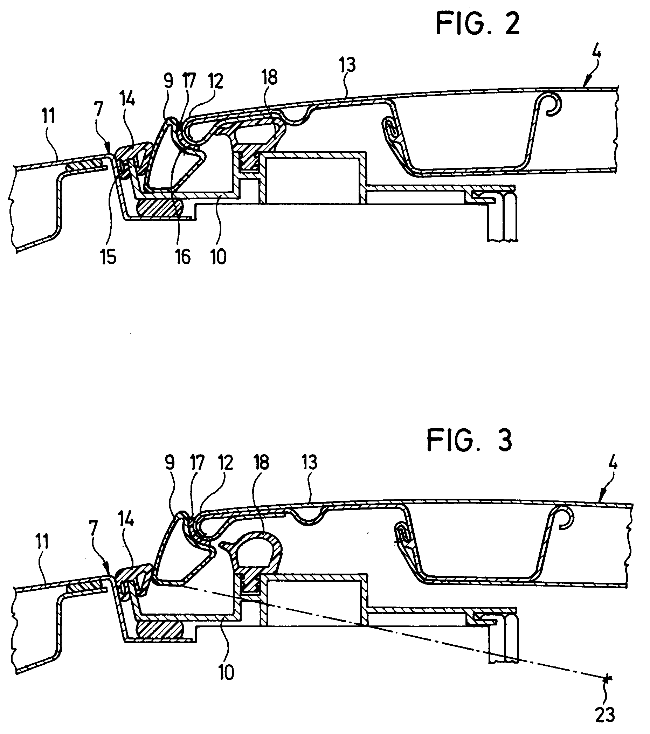

An einer Vorderkante 7 der Dachöffnung 3 ist ein Windabweiser 8 angeordnet (Fig. 1 und 2), der ein sich quer über die Breite der Dachöffnung 3 erstreckendes Luftleitprofil 9 aufweist. Dieses ist als Hohlprofilteil mit geschlossenem Querschnitt ausgebildet und der Form bzw. der Wölbung der Vorderkante 7 der Dachöffnung 3 in Querrichtung angepaßt. Das Luftleitprofil 9 wird in seiner Schließstellung (Fig. 2) im wesentlichen von einem Rahmenvorderteil 10 aufgenommen, das in diesem Bereich beispielsweise eine als Wasserablauf geformte Rinne aufweist. In dem dargestellten Ausführungsbeispiel erstreckt sich das Luftleitprofil 9 auch in seiner Ruheposition geringfügig über die Dachkontur 11 hinaus, um eine strömungsgünstige Windleitung über eine Vorderkante 12 eines vorderen Festteils 13 des Faltdaches 4 zu erzielen, das gegenüber der Dachkontur 11 leicht erhöht angeordnet ist, wobei gleichzeitig ein optisch ansprechender Übergang gebildet wird. Vor dem Luftleitprofil 9 ist eine Rahmendichtung 14 auf einem freien Ende 15 des Rahmenvorderteils 10 aufgesteckt, um das Luftleitprofil 9 gegenüber der Vorderkante 7 der Dachöffnung 3 abzudichten.

Die Dichtung 14 weist vorteilhaft zumindestens an ihrer dem Luftleitprofil zugewandten Fläche eine gleitfähige Beschichtung auf, die von einem Gleitlack gebildet ist. Das Luftleitprofil 9 weist in seinem oberen Bereich eine Paßfläche 16 auf, an der eine Dichtung 17 z. B. in Form eines flexiblen Dichtbandes angebracht ist. Die Paßfläche 16 ist in ihrer Form an die Vorderkante 12 des vorderen Festteils 13 des Faltdachs 4 angepaßt. So kann die Vorderkante 12 abgerundet sein, wobei dann die Paßfläche 16 entsprechend der Form der Vorderkante 12 konkav geformt ist. Beliebige andere Passungsformen sind verwendbar, die einen gegenseitigen dichten Eingriff und ein leichtes Abwälzen aufeinander während der Öffnungs- und Schließbewegungen gewährleisten.

Wenn das Faltdach 4 geschlossen ist, ruht die Vorderkante 12 des Festteils 13 auf der Dichtung 17 an der Paßfläche 16 und bildet somit eine zugluftfreie Abdichtung, die gleichzeitig auch eine wasserdichte Abdichtung darstellen kann. Zusätzlich liegt das Festteil 13 mit seiner Unterseite auf einer rahmenfesten Dichtung 18 auf, die am Dachrahmen 5 angebracht ist und im vorderen Bereich nahe dem Rand der Dachöffnung 3 verläuft und auch in den seitlichen Bereichen der Führungsschienen 6 zur Abdichtung des Faltdaches 4 dient.

Weiterhin weist der Windabweiser 8 eine Führungseinrichtung 19 für das Luftleitprofil 9 auf. Sie enthält jeweils einen Ausstellarm 20 (Fig. 4) an beiden Seiten des Luftleitprofils 9. Jeder Ausstellarm 20 ist einerseits im Bereich seines Längsabschnittes 25 mittels Schrauben 21 (oder Nieten, Clipsen oder dergleichen) am Dachrahmen 5 befestigt und andererseits über seinen gebogenen Übergangsabschnitt 22 mit dem Luftleitprofil 9 verbunden. Der Übergangsabschnitt 22 ist als Formteil der Abrundung des vorderen Festteils 13 des Faltdaches 4 in seinem Seitenbereich angepaßt. Wenn das Faltdach 4 geschlossen ist (Fig. 4), bedeckt sein vorderes Festteil 13 die seitlichen Ausstellarme 20 im Bereich ihres Längsabschnittes 25 sowie teilweise den gebogenen Übergangsabschnitt 22, der dann aus einer verdeckten Stellung unter dem Faltdach 4 in das unbedeckte Luftleitprofil 9 übergeht und an der Stelle des Hervortretens eine an das Festteil 13 angepaßte Ausformung aufweist.

Der Ausstellarm 20 besteht vorzugsweise aus einem vorgespannt befestigten elastischen Federblech, so daß er das Luftleitprofil 9 in seine Betriebsstellung drückt. In Fig. 3 ist das Luftleitprofil 9 in angehobener Stellung dargestellt, nachdem das vordere Festteil 13 des Faltdaches 4 im Verlauf der beginnenden Dachöffnungsbewegung in für ein Faltdach typischer Hubbewegung (wie in der DE 41 02 660 C1 beschrieben) angehoben worden ist. Das Luftleitprofil 9 schwenkt dabei mit dem Ausstellarm 20 um eine quer zum Fahrzeug liegende Schwenkachse 23, die in Fig. 3 am Ende einer strichpunktierten, einen Ausstellarm 20 andeutenden Linie dargestellt ist, in die angehobene Betriebsstellung, in der es durch einen Anschlag 24 begrenzt wird, der beispielsweise am seitlichen Dachrahmen 5 angebracht ist. In dieser Stellung besteht der auch während der Hochschwenkbewegung beibehaltene abdichtende Kontakt zwischen Luftleitprofil 9 und Festteil 13 fort. Nach dem Hochschwenken ist das Festteil 13 von der Dichtung 18 abgehoben und es kann nun zum Freigeben der Dachöffnung 3 nach hinten verschoben werden. Dabei treten keine negativen, die Fahrzeuginsassen beeinträchtigenden Zuglufterscheinungen auf, da die Leitwirkung des Luftleitprofils 9 schon in vollem Umfang eingesetzt hat, bevor die Dachöffnung 3 freigegeben wird.

Im dargestellten Ausführungsbeispiel steht das Luftleitprofil 9 in seiner Betriebsstellung ca. 18 mm über die Dachhaut 11 hinaus. In seiner Außerbetriebsstellung ragt es geringfügig über die Dachhaut 11 hinaus, um eine Luftleitwirkung für die Vorderkante 12 des Festteils 13 des Faltdaches 4 auch in geschlossenem Zustand bereitzustellen. Jedoch kann das Luftleitprofil 9 insbesondere bei einer Verwendung in Verbindung mit einem Deckel eines Spoilerdaches auch gänzlich auf das Niveau der Dachhaut 11 abgesenkt werden, wobei dann gegebenenfalls die Vorderkante 12 des Festteils 13 ebenso auf das Niveau der Dachhaut 11 abgesenkt ist.

### Bezugszeichenliste

- 1: Dachfläche
- 2: Fahrzeugdach
- 3: Dachöffnung
- 4: Faltdach
- 5: Dachrahmen
- 6: Führungsschiene
- 7: Vorderkante
- 8: Windabweiser
- 9: Luftleitprofil
- 10: Rahmenvorderteil
- 11: Dachkontur
- 12: Vorderkante
- 13: Festteil
- 14: Rahmendichtung
- 15: freies Ende
- 16: Paßfläche
- 17: Dichtung
- 18: Dichtung (rahmenfest)
- 19: Führungseinrichtung
- 20: Ausstellarm
- 21: Schrauben
- 22: Übergangsabschnitt
- 23: Schwenkachse
- 24: Anschlag
- 25: Längsabschnitt

## Patentansprüche

1. Windabweiser für eine mittels eines beweglichen Dachteils verschließbare und wenigstens teilweise freigebbare Dachöffnung in einem Fahrzeug, wobei der Windabweiser ein an der Vorderkante der Dachöffnung angeordnetes Luftleitprofil und eine Führungseinrichtung aufweist, die das Luftleitprofil mittels einer Ausstellbewegung in eine Betriebsstellung und mittels einer Rückstellbewegung in eine Außerbetriebsstellung führt, und wobei das Dachteil am Luftleitprofil in dessen Außerbetriebsstellung abdichtend anliegt, **dadurch gekennzeichnet, daß** das Luftleitprofil (9) und das Dachteil (4) während der Ausstellbewegung und während der Rückstellbewegung des Luftleitprofils (9) in abdichtendem Kontakt sind.

2. Windabweiser nach Anspruch 1, **dadurch gekennzeichnet**, daß die Führungseinrichtung (19) das Luftleitprofil (9) bei der Ausstellbewegung und der Rückstellbewegung auf einer geraden oder leicht gekrümmten Bahnkurve führt.

3. Windabweiser nach Anspruch 1 oder 2, **dadurch gekennzeichnet**, daß die Führungseinrichtung (19) das Luftleitprofil (9) um eine luftleitprofilferne Querachse (23) schwenkt.

4. Windabweiser nach einem der Ansprüche 1 bis 3, **dadurch gekennzeichnet**, daß die Führungseinrichtung (19) Ausstellarme (20) am seitlichen Dachrahmen (5) der Dachöffnung (3) aufweist.

5. Windabweiser nach Anspruch 4, **dadurch gekennzeichnet**, daß jeder Ausstellarm (20) einen Längsabschnitt (25) zum Befestigen am Dachrahmen (5) der Dachöffnung (3) und einen daran anschließenden, mit dem Luftleitprofil (9) verbundenen Übergangsabschnitt (22) enthält.

6. Windabweiser nach Anspruch 5, **dadurch gekennzeichnet**, daß der Übergangsabschnitt (22) bei geschlossenem Dachteil (4) zumindest teilweise von diesem überdeckt ist.

7. Windabweiser nach einem der Ansprüche 4 bis 6, **dadurch gekennzeichnet**, daß der Dachrahmen (5) im Bereich von jedem Ausstellarm (20) ein Anschlag (24) zum Begrenzen des Ausstellweges des Ausstellarmes (20) aufweist.

8. Windabweiser nach einem der Ansprüche 4 bis 7, **dadurch gekennzeichnet**, daß der Ausstellarm (20) zumindest in seinem Längsabschnitt (25) ein vorgespanntes Federblech ist.

9. Windabweiser nach einem der Ansprüche 4 bis 8, **dadurch gekennzeichnet**, daß der Ausstellarm (20) durch ein Federelement in Ausstellrichtung vorgespannt ist.

10. Windabweiser nach einem der Ansprüche 4 bis 9, **dadurch gekennzeichnet**, daß der Ausstellarm (20) aus Kunststoff besteht.

11. Windabweiser nach einem der Ansprüche 1 bis 10, **dadurch gekennzeichnet**, daß das Luftleitprofil (9) eine Paßfläche (16) zum Eingriff mit einem Vorderbereich des Dachteils (4) aufweist.

12. Windabweiser nach Anspruch 11, **dadurch gekennzeichnet**, daß die Paßfläche (16) konkav ausgebildet ist.

13. Windabweiser nach Anspruch 11 oder 12, **dadurch gekennzeichnet**, daß die Paßfläche (16) eine Dichtung (17) aufweist.

14. Windabweiser nach einem der Ansprüche 1 bis 13, **dadurch gekennzeichnet**, daß das Luftleitprofil (9) in Außerbetriebsstellung das bewegliche Dachteil (4) von der Vorderkante (7) der Dachöffnung (3) trennt.

15. Windabweiser nach einem der Ansprüche 1 bis 14, **dadurch gekennzeichnet**, daß eine Dichtung (14) zwischen der Vorderkante (7) der Dachöffnung (3) und dem Luftleitprofil (9) angeordnet ist.

16. Windabweiser nach Anspruch 15, **dadurch gekennzeichnet**, daß die Dichtung (14) an der Vorderkante (7) der Dachöffnung (3), am Dachrahmen (5) oder am Luftleitprofil (9) befestigt ist.

17. Windabweiser nach einem der Ansprüche 1 bis 16, **dadurch gekennzeichnet**, daß das bewegliche Dachteil (4) ein Spoiler- oder ein Faltdach (4) ist.

18. Windabweiser nach einem der Ansprüche 1 bis 17, **dadurch gekennzeichnet**, daß das Luftleitprofil (9) ein Hohlprofil mit einem geschlossenen Querschnitt ist.

19. Windabweiser nach einem der Ansprüche 1 bis 18, **dadurch gekennzeichnet**, daß das Luftleitprofil (9) beidseitig durch eine ineinandergreifende Steckverbindung mit der Führungseinrichtung verbunden ist.

20. Windabweiser nach einem der Ansprüche 1 bis 18, **dadurch gekennzeichnet**, daß das Luftleitprofil (9) mit der Führungseinrichtung einstückig ausgebildet ist.

21. Windabweiser nach einem der Ansprüche 1 bis 20, **dadurch gekennzeichnet**, daß das Luftleitprofil (9) aus Kunststoff oder aus Leichtmetall besteht.

## Claims

1. A wind deflector for a roof opening in a vehicle and which can be at least partially opened and closed by means of a movable roof part, the wind deflector comprising, disposed at the front edge of the roof opening, an air guide profile and a guide arrangement which guides the air guide profile by means of a pushing-out movement into an operative position and by a restoring movement into an inoperative position and whereby the roof part bears in sealing-tight manner on the air guide profile in the inoperative position thereof, characterised in that the air guide profile (9) and the roof part (2) are in sealing-tight contact during the pushing-out movement and during the restoring movement of the air guide profile (9).

2. A wind deflector according to Claim 1, characterised in that the guide arrangement (19) guides the air guide profile (9) on a straight or slightly curved path during the pushing-out movement and the restoring movement.

3. A wind deflector according Claim 1 or 2, characterised in that the guide arrangement (19) pivots the air guide profile (9) about a transverse axis (23) which is remote from the air guide profile.

4. A wind deflector according to one of Claims 1 to 3, characterised in that the guide arrangement (19) comprises push-out arms (20) on the lateral roof frame (5) of the roof opening (3).

5. A wind deflector according to Claim 4, characterised in that each push-out arm (20) comprises a longitudinal portion (25) for fitment on the roof frame (5) of the roof opening (3) and a transition portion (22) adjacent to it and connected to the air guide profile (9).

6. A wind deflector according to Claim 5, characterised in that the transition portion (22) is at least partially covered by the roof part (4) when this latter is closed.

7. A wind deflector according to one of Claims 4 to 6, characterised in that the roof frame (5) comprises in the region of each push-out arm (20) an abutment (24) for limiting the distance to which the push-out arm (20) can be pushed out.

8. A wind deflector according to one of Claims 4 to 7, characterised in that at least the longitudinal portion (25) of the push-out arm (20) is a pre-tensioned spring plate.

9. A wind deflector according to one of Claims 4 to 8, characterised in that the push-out arm (20) is pre-tensioned in the push-out direction by a spring element.

10. A wind deflector according to one of Claims 4 to 9, characterised in that the push-out arm (20) consists of a synthetic plastics material.

11. A wind deflector according to one of Claims 1 to 10, characterised in that the air guide profile (9) comprises a fitting surface (16) for engaging a front portion of the roof part (4).

12. A wind deflector according to Claim 11, characterised in that the fitting surface (16) is of concave construction.

13. A wind deflector according to Claim 11 or 12, characterised in that the fitting surface (16) comprises a seal (17).

14. A wind deflector according to one of Claims 1 to 13, characterised in that the air guide profile (9), when in the inoperative position, isolates the movable roof part (4) from the front edge (7) of the roof opening (3).

15. A wind deflector according to one of Claims 1 to 14, characterised in that a seal (14) is disposed between the front edge (7) of the roof opening (3) and the air guide profile (9).

16. A wind deflector according to Claim 15, characterised in that the seal (14) is fixed on the front edge (7) of the roof opening (3), on the roof frame (5) or on the air guide profile (9).

17. A wind deflector according to one of Claims 1 to 16, characterised in that the movable roof part (4) is a spoiler roof or a folding roof (4).

18. A wind deflector according to one of Claims 1 to 17, characterised in that the air guide profile (9) is a hollow profile with a closed cross-section.

19. A wind deflector according to one of Claims 1 to 18, characterised in that the air guide profile (9) is at both ends connected to the guide means by an inter-engaging push-in connection.

20. A wind deflector according to one of Claims 1 to 18, characterised in that the air guide profile (9) is constructed in one piece with the guide arrangement.

21. A wind deflector according to one of Claims 1 to 20, characterised in that the air guide profile (9) consists of synthetic plastics material or of a light metal.

## Revendications

1. Déflecteur pour toit ouvrant de véhicule comportant une ouverture de toit qui peut être fermée ou partiellement dégagée par une partie mobile de toit, le déflecteur comportant un profilé directeur de l'air disposé le long du bord avant de l'ouverture ainsi qu'un dispositif de guidage qui amène le profilé directeur, par relèvement, en position active et le ramène par un mouvement inverse de rabattement en position inactive, la partie de toit située le long du profilé directeur étant en contact étanche avec ce profilé lorsqu'il est en position inactive,
caractérisé en ce que
le profilé directeur d'air (9) et la partie mobile de toit (4) sont en contact étanche pendant les mouvements de relèvement et de rabattement.

2. Déflecteur selon la revendication 1,
caractérisé en ce que
le dispositif de guidage (19), pendant les mouvements de relèvement et de rabattement, déplace le profilé directeur d'air (9) le long d'une piste droite ou légèrement courbe.

3. Déflecteur selon la revendication 1 ou 2,
caractérisé en ce que
le dispositif de guidage (19) fait basculer le profilé directeur d'air (9) autour d'un axe transversal (23) éloigné du profilé directeur.

4. Déflecteur selon une des revendications 1 à 3,
caractérisé en ce que
le dispositif de guidage (19) comporte des bras de relèvement (20) montés sur le cadre de toit (5) bordant latéralement l'ouverture (3).

5. Déflecteur selon la revendication 4,
caractérisé en ce que
chaque bras de relèvement (20) comporte une partie longitudinale (25) pour fixation sur le cadre (5) de l'ouverture (3), suivie d'une partie de raccordement (22) ou transition au profilé directeur d'air (9).

6. Déflecteur selon la revendication 5,
caractérisé en ce que
la partie de raccordement (22) est recouverte par la partie mobile de toit (4) lorsque celle-ci est en position de fermeture.

7. Déflecteur selon une des revendications 4 à 6,
caractérisé en ce que
le cadre de toit (5) présente dans la zone de chacun de ses bras de relèvement (20) une butée (24) limitant le relèvement de ces bras.

8. Déflecteur selon une des revendications 4 à 7,
caractérisé en ce que
le bras de relèvement (20), au moins dans sa partie longitudinale (25), est fait d'une tôle élastique sous tension initiale.

9. Déflecteur selon une des revendications 4 à 8,
caractérisé en ce que
le bras de relèvement (20), en position relevée, est soumis à l'action d'un élément élastique.

10. Déflecteur selon une des revendications 4 à 9,
caractérisé en ce que
le bras de relèvement (20) est en matière plastique.

11. Déflecteur selon une des revendications 1 à 10,
caractérisé en ce que
le profilé directeur d'air (9) présente une portée ajustée (16) pour prise avec le bord antérieur de la partie mobile de toit (4).

12. Déflecteur selon la revendication 11,
caractérisé en ce que
la portée ajustée (16) a une forme concave.

13. Déflecteur selon la revendication 11 ou 12,
caractérisé en ce que
la portée ajustée (16) est équipée d'un joint d'étanchéité (17).

14. Déflecteur selon une des revendications 1 à 13,
caractérisé en ce que
le profilé directeur d'air (9), lorsqu'il est en position inactive, sépare la partie mobile de toit (4) du bord avant (7) de l'ouverture de toit (3).

15. Déflecteur selon une des revendications 1 à 14,
caractérisé en ce qu'
un joint d'étanchéité (14) est monté entre le bord avant (7) de l'ouverture de toit (3) et le profilé directeur d'air (9).

16. Déflecteur selon la revendication 15,
caractérisé en ce que
le joint d'étanchéité (14) est fixé sur le bord avant (7) de l'ouverture de toit (3), sur le cadre de toit (5) ou sur le profilé directeur d'air (9).

17. Déflecteur selon une des revendications 1 à 16,
caractérisé en ce que
la partie mobile de toit (4) est un toit à spoiler ou un toit pliant (4).

18. Déflecteur selon une des revendications 1 à 17,
caractérisé en ce que
le profilé directeur d'air (9) est un profilé creux à section fermée.

19. Déflecteur selon une des revendications 1 à 18,
caractérisé en ce que
le profilé directeur d'air (9) est relié des deux côtés, par une liaison à emboîtement réciproque, au dispositif de guidage.

20. Déflecteur selon une des revendications 1 à 18,
caractérisé en ce que
le profilé directeur d'air est monobloc avec le dispositif de guidage.

21. Déflecteur selon une des revendications 1 à 20,
caractérisé en ce que
le profilé directeur d'air (9) est en matière plastique ou en métal léger.
